(19)

Europäisches Patentamt

European Patent Office

Office européen des brevets

(11) **EP 4 485 750 A1**

(12) **EUROPEAN PATENT APPLICATION**
published in accordance with Art. 153(4) EPC

(43) Date of publication:
**01.01.2025 Bulletin 2025/01**

(21) Application number: **22927608.4**

(22) Date of filing: **28.12.2022**

(51) International Patent Classification (IPC):
$H02J\ 7/04^{(2006.01)}$      $G01R\ 31/374^{(2019.01)}$
$G01R\ 31/385^{(2019.01)}$     $H01M\ 10/48^{(2006.01)}$
$H02J\ 7/00^{(2006.01)}$

(52) Cooperative Patent Classification (CPC):
**G01R 31/374; G01R 31/385; H01M 10/48;
H02J 7/00; H02J 7/04**

(86) International application number:
**PCT/JP2022/048652**

(87) International publication number:
**WO 2023/162473 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.02.2022 JP 2022028499**

(71) Applicant: **Hitachi, Ltd.**
**Tokyo 100-8280 (JP)**

(72) Inventors:
• **UEDA, Suguru**
**Tokyo 100-8280 (JP)**

• **NAITO, Shunya**
**Tokyo 100-8280 (JP)**
• **TAKAHASHI, Chiaki**
**Tokyo 100-8280 (JP)**
• **MARUKO, Takuya**
**Tokyo 100-8280 (JP)**
• **DAIRAKU, Yosuke**
**Tokyo 100-8280 (JP)**
• **SHINOMIYA, Takeshi**
**Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **BATTERY SYSTEM AND METHOD OF CONTROLLING SAME**

(57) Provided is a battery system including: a power storage system that has a plurality of battery cells, and is mounted on a mobile body; and a charge rate control unit that controls the charge rate of the power storage system. The charge rate control unit controls, on the basis of the temperature of the power storage system and the charge rate of the power storage system, charging of the power storage system from charging equipment when the operation of the mobile body is ended, and sets charging control conditions such that the charge rate of the power storage system is greater than a first charge rate threshold in a state in which the temperature of the power storage system is greater than a first temperature threshold, and the charge rate of the power storage system is less than a second charge rate threshold, which is less than or equal to the first charge rate threshold, in a state in which the temperature of the power storage system is less than a second temperature threshold which is less than or equal to the first temperature threshold. The temperature may be converted from a measured value or a predicted value of storage battery temperature, or ambient temperature. Thus, provided is the battery system that can also ensure the mobility of a mobile body by means of a secondary battery that is controlled to a state of charge (SOC) that is adaptable to the outside temperature so as to achieve a long life and stabilization.

EP 4 485 750 A1

# FIG. 3

**Description**

Technical Field

The present invention relates to a battery system and a method of controlling the same.

Background Art

With respect to a power storage system including a secondary battery, controlling with appropriate temperature and charge rate (SOC: State of Charge) is important for stably securing the output characteristic of the secondary battery and suppressing battery deterioration of the secondary battery. For example, in Patent Literature 1, there is disclosed a storage battery controller acquiring temperature information and charge rate information of a secondary battery, and switching the secondary battery to a discharge state when the charge rate of the secondary battery is a specific threshold or above and the second battery temperature is a specific threshold temperature or below based on the information.

Citation List

Patent Literature

Patent Literature 1: Japanese Unexamined Patent Application Publication No. 2019-4565

Summary of Invention

Technical Problem

According to the storage battery controller of Patent Literature 1, since such event can be suppressed that the secondary battery under a low temperature environment is cooled and the second battery temperature drops, there is an effect of suppressing deterioration of the output characteristic of the secondary battery. However, in Patent Literature 1, there is no mention on a controlling technology on the charge rate of the secondary battery and a service method under a high temperature environment from the viewpoint of suppressing deterioration.

The present invention has been achieved in view of the problem described above, and its object is to provide a battery system enabling stable long-term utilization of a secondary battery by properly controlling SOC of the secondary battery according to the external air temperature and thereby enabling to secure mobility of a mobile body. Solution to Problem

The present invention solving the problem described above is a battery system including: a power storage system that has a plurality of battery cells, and is mounted on a mobile body; and a charge rate control unit that controls the charge rate of the power storage system, in which the charge rate control unit controls, on the basis of the temperature of the power storage system and the charge rate of the power storage system, charging of the power storage system from charging equipment when the operation of the mobile body is ended, and sets charging control conditions such that the charge rate of the power storage system is greater than a first charge rate threshold in a state in which the temperature of the power storage system is greater than a first temperature threshold, and the charge rate of the power storage system is lower than a second charge rate threshold, which is equal to or lower than the first charge rate threshold, in a state in which the temperature of the power storage system is lower than a second temperature threshold which is equal to or lower than the first temperature threshold.

Advantageous Effects of Invention

According to the present invention, it is possible to provide a battery system enabling stable long-term utilization of a secondary battery by properly controlling SOC of the secondary battery according to the external air temperature and thereby enabling to secure mobility of a mobile body.

Brief Description of Drawings

[FIG. 1] FIG. 1 is a graph illustrating a temperature characteristic of a secondary battery output.
[FIG. 2] FIG. 2 is a graph illustrating a rectangular wave applied to a warm-up process.
[FIG. 3] FIG. 3 is a functional block diagram illustrating a summary of a battery system related to an embodiment of the present invention (will be hereinafter referred to as "the present battery system").
[FIG. 4] FIG. 4 is a graph illustrating a temperature characteristic (temperature dependability) of battery deterioration used for setting the temperature threshold.
[FIG. 5] FIG. 5 is a graph illustrating charge rate dependability of battery deterioration used for setting the charge rate threshold.
[FIG. 6] FIG. 6 is a functional block diagram illustrating a summary of a battery system related to a modification of the present invention (this also will be referred to as "the present battery system").

Description of Embodiments

Embodiments of the present invention will be hereinafter described in detail using the drawings and the like. Explanations described hereinafter express concrete examples of the content of the present invention, the present invention is not to be limited to these explanations, and various alterations and modifications by a person with an ordinal skill in the art are possible within a range of the technical thought disclosed in the present description. Further, in all drawings for explaining the present invention, those having a same function will be marked with a same reference sign, and repeated explanation for the same will be omitted. Furthermore, a second battery (storage battery) may possibly be hereinafter abbreviated simply as "battery".

[Basic Example]

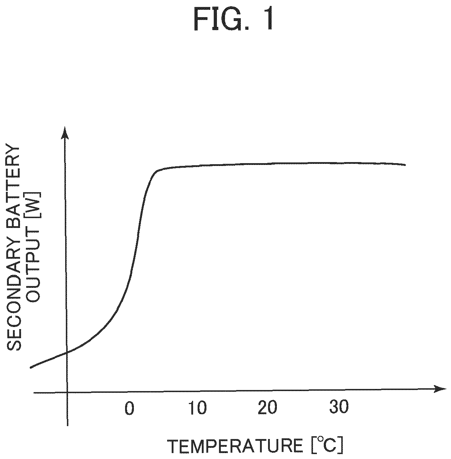

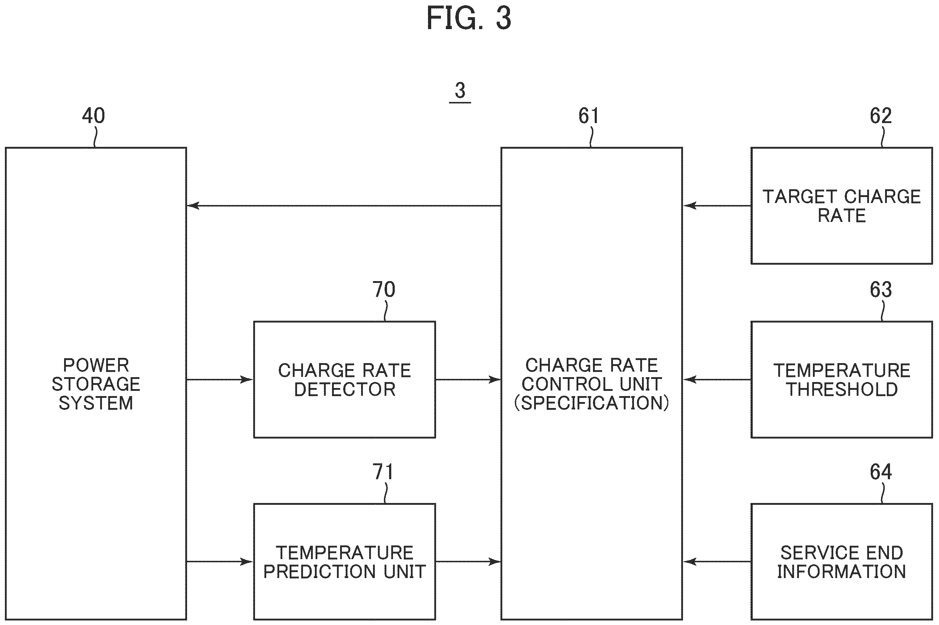

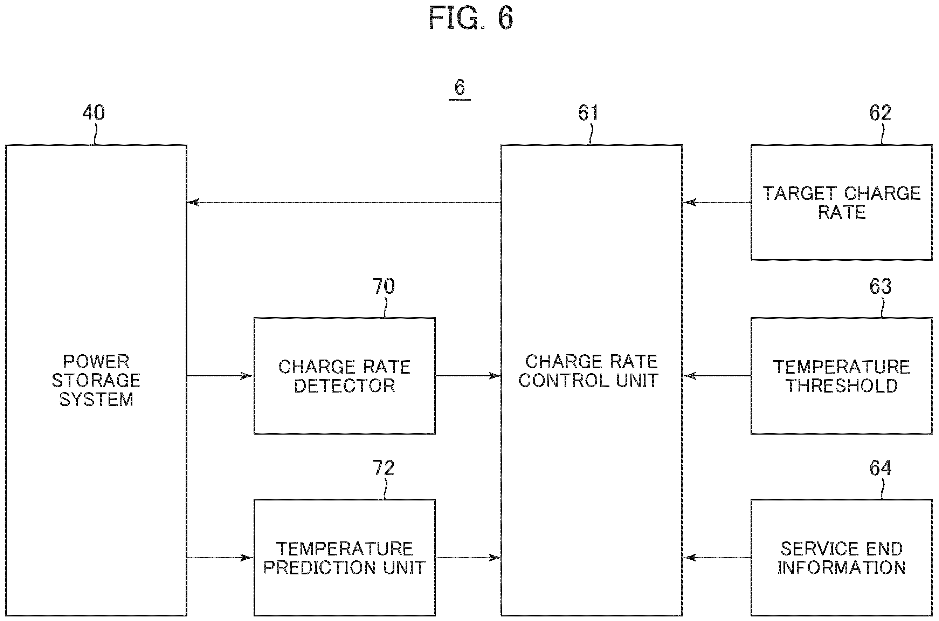

FIG. 1 is a graph illustrating a temperature characteristic of a secondary battery output, the horizontal axis expresses the temperature [°C], and the vertical axis expresses the secondary battery output [W]. As illustrated in FIG. 1, there is known such temperature characteristic that the secondary battery output sharply drops in the temperature lower than 10°C. To this temperature characteristic, most of lithium ion batteries used in the present battery systems 3, 6 (FIG. 3, FIG. 6) correspond although there is slightly a difference according to the kind of the secondary battery.

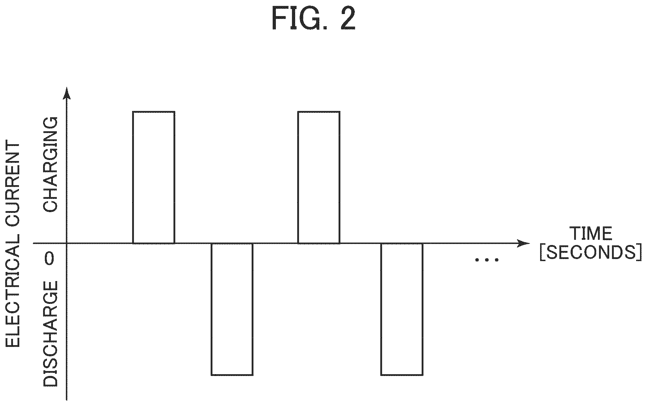

FIG. 2 is a graph illustrating a rectangular wave applied to a warm-up process, the horizontal axis expresses the time [sec], and the vertical axis expresses the charge and discharge current. In the graph of FIG. 2, the charge current is expressed in the positive direction, and the discharge current is expressed in the negative direction. In the warm-up process, although power consumption of a certain degree might be inevitable, in order to efficiently effect heat emission and heat retention of the battery with the minimum power consumption, as illustrated in FIG. 2, the secondary battery is repeatedly charged and discharged by a rectangular wave, and the secondary battery is heated by Joule heat generated by the charge and discharge current and the internal resistance (battery resistance R). A concrete example of the warm-up process other than the above will be described later.

FIG. 3 is a functional block diagram illustrating a summary of the battery system (the present battery system) 3 related to an embodiment of the present invention. In FIG. 3, there will also be expressed a control flow for a power storage system 40 that is a control object of the present battery system 3. A railway vehicle mounting the power storage system 40 can also travel on a non-electrified section also by stored power of the power storage system 40. The power storage system 40 is configured to include plural secondary batteries (battery cells) series-parallel connected, and a control function for equalizing these respective voltage and charge and discharge current.

A charge rate control unit (will be hereinafter referred to also as "control unit") 61 has a function of controlling the timing and the charge rate (SOC) for charging electric power to the power storage system 40, and is configured to include the control unit 61, target charge rate data 62 of the battery, a temperature threshold 63 used for setting the target charge rate, and information of the clock time when the service of the railway vehicle mounting the power storage system 40 ends (service end information 64).

The service end information 64 is registered beforehand in the control unit 61 based on the train schedule and the like. A data table is formed in a memory included in the control unit 61. In the data table, there is stored at least information of the service end clock time of the railway vehicle and a charging equipment where the railway vehicle stops at the service end clock time or in advance by a predetermined time earlier.

The control unit 61 is a control circuit formed of a computer and a hardware device executing software for example. The control unit 61 performs predetermined calculation based on information inputted from the outside (a charge rate detector 70, a temperature detector 71, and a time measuring instrument 80) and information retained in the inside (the target charge rate 62, the temperature threshold 63). The control unit 61 effects control so as to determine the charge rate of the power storage system 40 based on a result of the calculation described above. Such mode is also possible alternatively that a cell controller and the like appropriately delivers information to the control unit 61 while measuring the battery cell constantly or periodically at a level subordinate to the control unit 61.

The control unit 61 determines the charge rate with the first or the second value being employed for the target charge rate and the temperature threshold respectively based on the charge rate information acquired by the charge rate detector 70 and the temperature information acquired by the temperature detector 71. The detail of this control process will be described later. Also, with respect to the target charge rate 62 and the temperature threshold 63, at least either of a value registered in the control unit 61 beforehand and a value inputted to the control unit 61 from time to time only has to be applied, and it is also possible to combine the both.

The setting value of the target charge rate 62 and the temperature threshold 63 employed for the control unit 61 can be selected for each period. As an example, it is possible that a value registered in an internal memory of the control unit 61 beforehand is used during a certain period, and that a value inputted from the outside of the control unit 61 is used in a period other than the said period.

With respect to the target charge rate 62, two target charge rates of the first target charge rate and the second target charge rate are set. The first target charge rate is specified to be a threshold of the SOC value with which deterioration of the secondary battery hardly progresses. With respect to the second target charge rate, the upper limit value of SOC with which a warm-up process at an assumed current value can be executed is set.

However, when the SOC value set for the second target charge rate is lower than an SOC value (SOC*) with which the remaining capacity of the battery possibly becomes zero during traveling of the railway vehicle, SOC* is adopted for the value of the second target charge rate. According to the circumstances, the first target charge rate and the second target charge rate may be set to be a same value. In a similar manner, with respect to the temperature threshold 63 also, two temperature thresholds of the first temperature threshold and the second temperature threshold are set. According to the circumstances, again, the first temperature threshold and the second temperature threshold may be set to be a same value.

The service end information 64 at least includes a clock time when the railway vehicle ends the service, information on a charging equipment where the railway vehicle stops at a time point immediately before the end, and a clock time when the railway vehicle stops at the charging equipment. The charge rate detector 70 acquires information of the charging state of the power storage system 40 from the power storage system 40.

As the temperature information of the power storage system 40, the temperature detector 71 acquires temperature information of at least one of the temperature of the storage battery of one set or more provided within the power storage system 40 and the external air temperature. When plural temperature information have been measured, both of the maximum value and the minimum value out of them are applied.

Temperature information obtained by summarizing easily-acquired numerical values with an appropriate standard in an easy-to-use and convenient manner as described above is referred to as "temperature information of the power storage system 40". Although the temperature characteristic of the power storage system 40 is determined by the temperature of the internal electrode positioned in a deeper portion of the built-in battery cell, since it is hard to measure a true temperature, the control unit 61 adopts the conveniently summarized temperature information for charge rate controlling so as to substitute the true temperature.

A process for controlling the charge rate of the power storage system 40 by the control unit 61 will be hereinafter explained with exemplification and listing for respective concrete cases. The control unit 61 starts the control process in a charging equipment where the railway vehicle stops at a time point immediately before the service ends based on the service end information 64 of the railway vehicle. First, the control unit 61 acquires temperature information of the power storage system 40 from the temperature detector 71.

At this time, the control unit 61 compares the temperature value acquired and the temperature threshold 63, and acquires charge rate information of the power storage system 40 of the charge rate detector 70. Based on the magnitude relation of the temperatures and the charge rate information obtained, the control unit 61 controls the charge rate of the power storage system 40 as described below. Here, when the temperature value acquired from the temperature detector 71 has been measured by plural numbers, only the maximum value of them may be made the temperature information.

When the temperature value acquired from the temperature detector 71 (when plural values have been measured, the maximum value of them) is greater than the first temperature threshold and the charge rate acquired from the charge rate detector 71 is lower than the first target charge rate, the control unit 61 executes charging until the charge rate of the power storage system 40 reaches the target charge rate.

When the temperature value acquired from the temperature detector 71 (when plural values have been measured, the maximum value of them) is greater than the first temperature threshold and the charge rate acquired from the charge rate detector 71 is greater than the first target charge rate, the control unit 61 does not execute control of the power storage system 40.

When the temperature value acquired from the temperature detector 71 (when plural values have been measured, the minimum value of them) is lower than the second temperature threshold and the charge rate acquired from the charge rate detector 71 is lower than the second target charge rate, the control unit 61 executes charging until the charge rate of the power storage system 40 reaches the second target charge rate.

When the temperature value acquired from the temperature detector 71 (when plural values have been measured, the minimum value of them) is lower than the second temperature threshold and the charge rate acquired from the charge rate detector 71 is greater than the second target charge rate, the control unit 61 executes discharging until the charge rate of the power storage system 40 reaches the second target charge rate. Also, when the temperature and the charge rate of the power storage system 40 are not applicable to any of the above, the control unit 61 does not execute a control process for the power storage system 40.

By executing the charge rate control described above, both of suppression of deterioration of the storage battery under a high temperature environment and high efficiency of the warm-up process under a low temperature environment can be achieved. A secondary battery using spinel type lithium manganate ($LiMn_2O_4$) for a positive electrode exemplifies the above.

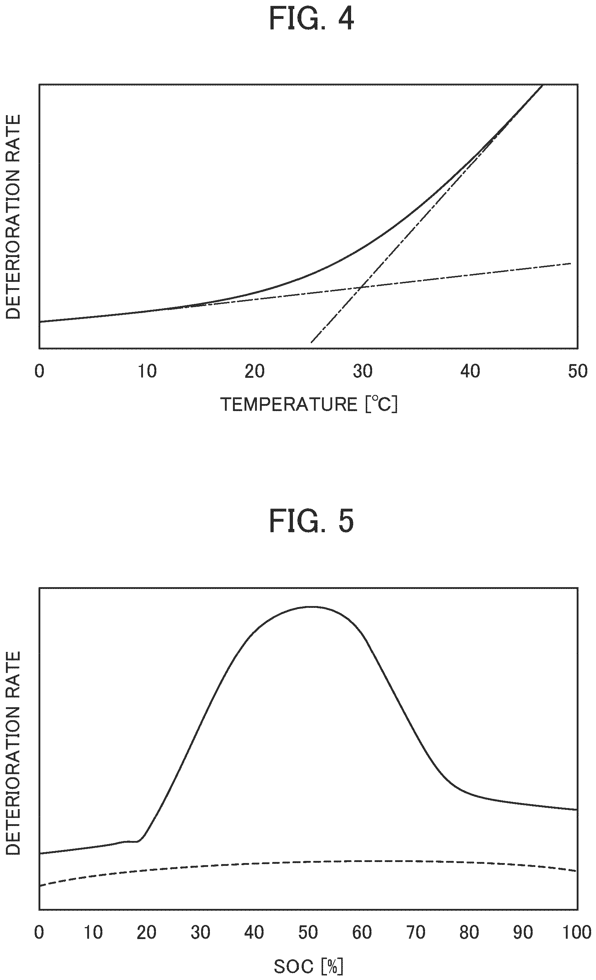

Also, a case where the surface temperature and the charge rate of a secondary battery have been measured will be hereinafter studied. In this case, the first temperature threshold and the second temperature threshold are preferable to be 30°C or above and 30°C or below respectively, and are more preferable to be 35°C or above and 25°C or below respectively. Also, the first target charge rate and the second target charge rate are preferable to be 70% or above and 70% or below respectively, and are more preferable to be 75% or above and 60% or below respectively. The reason for them will be given using FIG. 4.

FIG. 4 is a graph illustrating a temperature characteristic of battery deterioration used for setting the temperature threshold, the horizontal axis expresses the temperature [°C], and the vertical axis expresses the deterioration rate. The solid line of FIG. 4 expresses the temperature characteristic of the deterioration rate of the secondary battery, and such state can be confirmed that the deterioration rate of the secondary battery sharply increases as the temperature rises. As illustrated in FIG. 4, the deterioration rate gradually increases around the point exceeding 20°C, and some measures come to be required when the temperature exceeds 40°C to 50°C.

Also, the single dot chain line of FIG. 4 is a tangent line on the higher temperature side of 40°C or above in the temperature characteristic illustrated by the solid line, and a tangent line on the lower temperature side of 10°C or below in the temperature characteristic illustrated by the solid line. Thus, around 30°C where the intersection point of the tangent line on the lower temperature side and the tangent line on the higher temperature side is located, the deterioration rate sharply increases. Therefore, the first temperature threshold is preferable to be equal to or greater than a value (30°C) where increase of the deterioration rate occurs, and the second temperature threshold is preferable to be equal to or lower than such value (30°C).

Further, although such case was exemplified here that the surface temperature of the secondary battery was measured as the information of the temperature, when the ambient temperature has been measured, it is preferable to use a value lower than the first and second temperature thresholds described above by approximately 5 to 10°C. The reason of it is that the surface temperature of the secondary battery becomes higher than the ambient temperature by approximately 5 to 10°C by emission of Joule heat in using the secondary battery.

Next, a method for determining the value of the first and second target charge rates will be shown. These first target charge rate and second target charge rate are preferable to be 70% or above and 70% or below respectively, and are more preferable to be 75% or above and 60% or below respectively. The reason of it will be given using FIG. 5.

FIG. 5 is a graph illustrating charge rate dependability of battery deterioration used for setting the charge rate threshold, the horizontal axis expresses SOC [%], and the vertical axis expresses the deterioration rate. The solid line of FIG. 5 illustrates a result at 40°C (the first temperature threshold or above), and the broken line expresses a result at 10°C (the second temperature threshold or below). Also, when the charge rate of the secondary battery is too low, energy required for traveling of the railway vehicle cannot be supplemented, and therefore explanation of the object will be hereinafter a region where the charge rate is 50% or above.

As illustrated by the broken line of FIG. 5, the secondary battery has very low charging rate dependability of the deterioration rate in the first temperature threshold or below. However, as illustrated by the solid line of FIG. 5, the charging rate dependability of the deterioration rate of the secondary battery increases in the first temperature threshold or above, and the deterioration rate changes largely in particular with approximately 30% and 70% of the charge rate as a boundary. Therefore, with respect to the secondary battery, it is preferable that the first target charge rate is made a range of SOC with a lower deterioration rate (70% or above of SOC), and the second target charge rate is also made a range of SOC with a lower deterioration rate (30% or below of SOC) in the first temperature threshold or above.

With respect to the present battery system 3, explanation will be made how deterioration of the secondary battery is suppressed when the first and second temperature thresholds and the first and second charge rates set as described above are used. As an example, first, such case is studied that the temperature value acquired by the temperature detector 71 is 40°C, and SOC acquired from the charge rate detector 71 is 60%.

Since the temperature values described above are the first temperature threshold or below and the SOC are the first target charge rate or below, the control unit 61 controls charging of the present battery system 3 so that the SOC of the secondary battery in the power storage system 40 becomes 70% or above. Thus, the present battery system 3 prevents the secondary battery in the power storage system 40 from being retained for a long time in a middle SOC band (the range of 40% to 70% of SOC, refer to the solid line of FIG. 5) under such high temperature as 40°C. As a result, the present battery system 3 can suppress accelerative progress of deterioration of the secondary battery.

As another example, such case is explained that the temperature value acquired by the temperature detector 71 is 10°C and the SOC acquired by the charge rate detector 71 is 60%. At this time, since the temperature value is the second temperature threshold or below and the SOC is the second target charge rate or below, the present battery system 3 does not control charging and discharging of the secondary battery. The reason of it is that, since SOC dependability of the deterioration rate of the secondary battery is extremely low in such low temperature of lower than 10°C, as illustrated by the broken line of FIG. 5, an effect of such control on deterioration of the secondary battery is extremely small.

On the other hand, under such low temperature as 10°C, it is desirable to execute a warm-up process for the secondary battery before using the secondary battery for traveling of a railway vehicle. At this time, according to the present battery system 3, since sooner warm-up process can be started for the power storage system 40 when the SOC value is one enabling a warm-up process (the range of 50% to 70% of SOC), the time required for the warm-up process before the start of the vehicle service can be minimized.

[Modification Example]

FIG. 6 is a functional block diagram illustrating a summary of a battery system (this is also the present battery system) 6 related to a modification of the present battery system. The present battery system 6 of FIG. 6 is different in terms of employing a temperature prediction unit 72 instead of the temperature detector 71 in the present battery system 3 of FIG. 3.

In a temperature pre-estimation unit 73, it is preferable, at timing when the service of a railway vehicle mounting the power storage system 40 ends, to have a function of acquiring a predicted value of the external air temperature of a time point when the railway vehicle is put in service next referring to meteorological forecast information and the like. For example, when the service of a railway vehicle ends in the evening of a certain date and time, the service is restarted next morning, a predicted value of the external air temperature of the next morning is acquired by the temperature pre-estimation unit 73.

An operation of the control unit 61 in the present battery system 6 with respect to the information acquired by the temperature prediction unit 72 will be hereinafter explained. It is common that a railway vehicle stops at a charging equipment at a time point immediately before the end of the service based on the service end information 64 namely a train schedule. The control unit 61 starts a control process for charging the power storage system 40 in a charging equipment where the railway vehicle stops. It is preferable that the temperature prediction unit 72 has a function of predicting, in an instant before the service end of the railway vehicle, the external air temperature of a clock time of the next first train or slightly before the clock time. The control unit 61 acquires the predicted value from the temperature prediction unit 72.

At this time, the control unit 61 compares the temperature value acquired from the temperature prediction unit 72 and the temperature threshold 63, and acquires charge rate information of the power storage system 40 from the charge rate detector 70. Based on the magnitude relation and the charge rate information acquired, the control unit 61 controls the charge rate of the storage battery system as described below.

When the temperature value acquired from the temperature prediction unit 72 is higher than the first temperature threshold and the charge rate acquired from the charge rate detector 71 is lower than the first target charge rate, the control unit 61 executes charging until the charge rate of the power storage system 40 reaches the target charge rate.

When the temperature value acquired from the temperature prediction unit 72 is lower than the second temperature threshold and the charge rate acquired from the charge rate detector 71 is lower than the second target charge rate, the control unit 61 executes charging until the charge rate of the power storage system 40 reaches the second target charge rate.

When the temperature value acquired from the temperature prediction unit 72 is lower than the second temperature threshold and the charge rate acquired from the charge rate detector 71 is higher than the second target charge rate, the control unit 61 executes discharging until the charge rate of the power storage system 40 reaches the second target charge rate. When the temperature and the charge rate of the power storage system 40 are not applicable to any of the above, the control unit 61 does not execute a control process for the power storage system 40.

When it is predicted that the ambient temperature rises, the present battery system 6 controls the charge rate of the battery and can suppress deterioration by executing a series of calculation described above by the control unit 61. To the contrary, when it is predicted that the ambient temperature lowers, the present battery system 6 controls the power storage system 40 to a charge rate capable of executing a warm-up process efficiently, and can thereby suppress disruption of the train schedule of the railway vehicle.

From the above, according to the present battery systems 3, 6, the mobility of a mobile body also can be secured by means of a secondary battery that is controlled by an appropriate SOC according to the external air temperature so as to achieve a long life and stabilization. That is to say, the present battery systems 3, 6 allow to utilize a secondary battery stably for a long time by controlling the charge rate of the secondary battery to a predetermined value according to the secondary battery temperature or the external air temperature and suppressing deterioration of the secondary battery under a high temperature environment. Also, the present battery systems 3, 6 can prevent delay of the train schedule of a railway vehicle even under a low temperature environment.

[Supplement]

Also, the present invention is not to be limited to the embodiments described above, and various modifications are to be included. For example, the present battery systems 3, 6 described above are those explained in detail for easy understanding of the invention, and are not necessarily to be limited to one including all configurations explained.

Also, a part of a configuration of an embodiment can be substituted by a configuration of other embodiments, and a configuration of an embodiment can be added with a configuration of other embodiments. Also, with respect to a part of a configuration of each embodiment, it is possible to effect addition, deletion, and substitution of other configurations.

Also, with respect to the configuration, function, processing unit, processing means, and the like expressed in each embodiment, a part or all of them may be achieved by hardware by designing them and so on by an integrated circuit for example. Also, each configuration, function, and the like described above may be achieved by software by that a CPU (Central Processing Unit) of a computer interprets and executes a program achieving each function.

Information of a program, table, file, and the like achieving each function can be placed in a recording device such as a hard disk and an SSD (Solid State Drive) which are memories, or in a recording medium such as an IC card, SD card, and DVD. Also, with respect to the control line and the information line, those considered to be required for explanation are illustrated, and all control lines and information lines of a product are not necessarily shown. In practice, almost all configurations can be considered to be connected to each other.

In recent years, reduction of the exhaust amount of carbon dioxide has been demanded in order to prevent global warming. For example, with respect to an automobile using a gasoline engine which is one of a large discharge source of carbon dioxide, substitution to a hybrid electric car, an electric car, and the like is proceeding. As a storage battery (secondary battery) suitable to the above and capable of charging and discharging, there exist a lithium ion secondary battery, nickel-hydrogen battery, lead battery, electric double layer capacitor, and the like. Among them, the power storage system 40 including plural battery cells with high output density represented by a lithium ion battery is employed widely for industrial use.

[Battery electric vehicle]

In recent years, the power storage system 40 of high voltage and large capacity has become popular. This power storage system 40 has been widely used in order to save energy in a railway vehicle field also. Particularly, with an object of reducing the environmental load of a railway vehicle traveling a non-electrified section without an overhead contact line, a battery electric vehicle mounting the power storage system 40 of high voltage and large capacity has started to become popular.

The battery electric vehicle not only travels using overhead contact line power obtained in an electrified section with an overhead contact line as a power source, but also can travel in a non-electrified section without an overhead contact line using the power storage system 40 as a power source. Therefore, the large power storage system 40 applied to a power source for power supply to the battery electric vehicle is required to be with high voltage and high power. Such power storage system 40 for high voltage and high power use is configured to connect plural battery cells in series and in parallel.

[Temperature characteristic of output]

For each battery cell configured as described above, standardized lithium ion batteries are heavily used. An output of a secondary battery represented by a lithium ion battery has a temperature characteristic strongly depending on the external air temperature. With respect to the point, as described above using FIG. 1, the temperature characteristic of causing sharp output drop particularly in a low temperature region from 10°C or below to 0°C becomes a usage problem.

A cause of this temperature characteristic is considered to be a fact that the resistance of the secondary battery increases under a low temperature environment as an example. As a phenomenon that the voltage of the secondary battery deviates an upper and lower limit range set in a specification by this temperature characteristic, overvoltage at the time of electrification rises. To cope with this phenomenon, the power storage system 40 activates a self defensive control function, and thereby electrification of the secondary battery is stopped. By electrification stop of the power storage system 40, not only discharging for driving a railway vehicle cannot be effected, but also charging of the power storage system 40 cannot be effected.

Therefore, when a secondary battery is to be used under a low temperature environment, there is required a process of heating the secondary battery beforehand so that the secondary battery temperature becomes 0°C or above, preferably 10°C or above (warm-up process). As such the warm-up process, in addition to a method of heating by a heater mounted on the power storage system 40 in advance, there can be cited a method that the secondary battery is repeatedly charged and discharged by a rectangular wave and the secondary battery is heated by Joule heat generated by the charge and discharge current and the internal resistance as described above using FIG. 2, and so on.

[SOC dependability of deterioration]

The ambient temperature in using a secondary battery also affects the deterioration characteristic of the secondary battery in addition to the output characteristic described above. In general, a secondary battery has such characteristic that deterioration is liable to progress when it is used at a high temperature of 30°C or above or 45°C or above. Other than the temperature, as one of the factors affecting deterioration of the secondary battery, the charge rate (SOC) can be cited.

The charge rate SOC is also called a charge state, and is generally expressed as 0% for the fully discharged state on the specification and 100% for the fully charged state, but there is also an expression by an inverse number of it. In general, with respect to the secondary battery, there is specified in the specification a range of SOC where operation is assured as a safe product. To operate the secondary battery exceeding the upper and lower limits of this SOC range by the specification should be avoided since it becomes a cause of damaging the power storage system 40 and also becomes a cause for shortening the service life of the power storage system 40.

Also, it is widely known that deterioration acceleratedly progresses in a specific SOC band even when the charge rate is within the specification SOC range, as the battery capacity reduces, the internal resistance increases, and an output fluctuates exceeding an allowable range. It is known that the SCO band where deterioration of a secondary battery is liable to progress depends on active material used for an electrode.

For example, a secondary battery using spinel type lithium manganate for a positive electrode active material has such characteristic that deterioration is liable to progress in a middle SOC band of approximately 30% to 60% under a high temperature environment. Therefore, in order to use a secondary battery stably for a long time, usage under a high temperature environment and in the middle SOC band should be avoided.

When deterioration of a secondary battery progresses, drop of the battery capacity and increase of the internal resistance occur. Therefore, accompanying deterioration of a battery, a power amount and an output of the power storage system 40 gradually drop, and the power storage system 40 eventually becomes unusable. In addition, when an output of the power storage system 40 drops during traveling of a railway vehicle, stoppage of the vehicle is incurred.

In order to prevent such problem, it is required to appropriately replace the power storage system 40 where deterioration of a secondary battery progressed. However, a large amount of secondary batteries is used by the power storage system 40 for a battery electric vehicle to adapt traveling of the vehicle, and the proportion of the cost of the secondary battery in the overall vehicle system is high. Therefore, the control technology for suppressing deterioration of the secondary battery is emphasized also from a viewpoint of suppressing the running cost of the vehicle system.

As an example of the measures for suppressing progress of deterioration, it is considered to be effective to maintain the charge rate of the secondary battery to a low SOC or a high SOC avoiding a middle SOC band. However, when the power storage system 40 is to be used in a low SOC (low charge rate), depending on a traveling section of the railway vehicle, there is a risk that the capacity of the secondary battery is consumed entirely during the travel. Also, when the power storage system 40 is to be used in a high SOC keeping the train schedule appropriately, there is a case that the warm-up process of the secondary battery under a low temperature becomes hard. The reason of it will be described below. Since the battery resistance R increases under a low temperature environment as described above, the battery voltage V at the time of charging is approximatively expressed as described below.

$$V = V\_OCV + IR \ \ldots\ldots\ (1)$$

Here, V_OCV (Open Circuit Voltage) is an open circuit voltage (battery voltage at the time of non-electrification), and I expresses the charge current value. In general, an upper and lower limit voltage allowing safe usage is set in the secondary battery, and it is common to limit the electrification amount when the secondary battery voltage deviates from this value. In such case, in order to efficiently execute warming up under a low temperature, it is required to increase the charge current value to increase emission of Joule heat.

Therefore, in order that the secondary battery voltage does not deviate from the upper limit value of the voltage while increasing the charge current value, it is required to reduce the open circuit voltage V_OCV in the expression (1) described above. If this fact corresponds to an operation for maintaining the charge rate (SOC) of the secondary battery to be low, the warm-up process possibly becomes hard when the power storage system 40 is used at a high SOC.

[Relation with train schedule]

When a current value capable to be applied to a secondary battery becomes small, the time required for warming up also becomes long which becomes a cause for delaying the train schedule of the railway vehicle. Further, although it is also possible to warm-up a secondary battery by discharging, in this case, such process is required to execute discharging to warm-up the secondary battery and to charge the secondary battery thereafter in preparation for vehicle travel, a long time is required until completion of a series of processes, and there is therefore a risk of incurring delay of the train schedule also in this case.

Therefore, with respect to the power storage system 40 mounted on a railway vehicle, the present battery systems 3, 6 controls charging and discharging as described below. First, information required for control is collected. That is to say, in the power storage system 40, the charge rate of any one or more battery cell out of plural battery cells included in the power storage system 40 and the temperature of any battery cell in a similar manner are measured constantly or periodically by a self-controller and the like. Also, the ambient temperature of the power storage system 40 is also measured constantly or periodically to be acquirable by the control unit 61.

Next, when the service of the vehicle ends, the control unit 61 controls charging and discharging based on a control rule described below. When the measured temperature is higher than a predetermined temperature, charging is executed so that the charge rate of the battery cell becomes higher than a predetermined value. To the contrary, when the measured temperature is lower than the predetermined temperature, charging is executed so that the charge rate of the battery becomes lower than the predetermined value. Also, with respect to the temperature information applied as this control rule, information of at least any one of the surface temperature of the battery cell and the ambient temperature which are easily measured as well as the estimate battery temperature by predetermine information and calculation formula may be used.

With respect to the present battery systems 3, 6, supplement explanation will be made separately to [1] to [8] described below from the viewpoints of the configuration, action, and effect.

[1] The present battery systems 3, 6 illustrated in FIG. 3 and FIG. 6 include the power storage system 40 that has plural battery cells and the control unit 61 that can control at least a charge rate and timing for charging with respect to the power storage system 40, and are applied to a mobile body. The power storage system 40 has a self-controller that manages a state of each of the plural battery cells or a function similar to that of the self-controller.

The control unit 61 can acquire information of at least the ambient temperature, battery temperature, and charge rate, and has a function of appropriately controlling the charge rate based on the information to adapt the ambient temperature. With respect to the ambient temperature, an actual measured value or a predicted value is employed. With respect to the predicted value, a calculated value or a numerical value different for each season may be set. With respect to the present battery system 3 of FIG. 3, the temperature detector 71 acquires the actual measured value. With respect to the present battery system 6 of FIG. 6, the temperature prediction unit 72 forms the prediction value based on meteorological information and the like. The battery temperature may be acquired or calculated through a self-controller and the like from any one or more of the battery cells included in the power storage system 40. The charge rate also may be measured actually by the self-controller and the like from any one or more of the battery cells included in the power storage system 40.

The control unit 61 applies a condition based on information acquired at timing described below, and controls charging. The timing is a time when a mobile body is immediately before the end of the service or the mobile body ends the service within an actual managing period. For example, in a railway where the service is managed by a train schedule, the timing can be considered to be immediately before the end of the service or the time of the end of the service of the last train in a managing period on a day-to-day basis.

Also, with respect to the railway vehicle namely the battery electric vehicle, there is a case that the end of the service is made an event that the battery electric vehicle stops at a charging equipment immediately before the end of service of the last train to execute charging and reaches a train depot and the like apart from the charging equipment. On the other hand, there is also a case that a charging equipment is attached to a train depot. There is also a case that the battery electric vehicle executes charging by power received from an overhead contact line without using a charging equipment. To all of these cases, the present battery systems 3, 6 can be applied.

With respect to the present battery systems 3, 6, the control unit 61 executes charging in accordance with a condition of charging control based on information acquired at the timing described above. The control unit 61 concretely sets a condition for charging control as described below to adapt to the ambient temperature.

- When the battery temperature is higher than the predetermined first temperature threshold, charging is executed so that the charge rate becomes higher than the first charge rate threshold.
- When the ambient temperature is lower than the predetermined second temperature threshold, charging is executed so that the charge rate becomes lower than the second charge rate threshold.

The present battery systems 3, 6 allow the secondary battery to be utilized stably for a long time by appropriately controlling the charge rate and the charge timing so as to adapt the ambient temperature. That is to say, when the control unit 61 executes charging in accordance with the condition of the charging control described above, the present battery systems 3, 6 are adapted to the ambient temperature, and therefore the life time of the plural battery cells configuring the power storage system 40 is extended and the resources energy efficiency can be improved. In addition, according to the present battery systems 3, 6, the mobility of a mobile body can be also ensured by means of a secondary battery that is controlled by an appropriate SOC according to the external air temperature.

[2] In [1] described above, the temperature of the power storage system 40 is a temperature of at least one storage battery out of plural storage batteries, or a measured value of the same, or a predicted value of the same, and may be converted from the ambient temperature. Also, the charge rate is a measured value or a calculated value of at least one storage battery out of plural storage batteries. Such present battery systems 3, 6 can be achieved easily by a simple configuration. Although the temperature characteristic of the battery is considered to be dependent on the temperature of the electrode, since it is hard to actually measure the temperature of the vicinity of the electrode in a non-destructive state, the temperature is estimated practically by a convenient alternative means. That is to say, the charge rate control unit 61 can achieve an object of the present invention to enable both of extension of the service life of the battery and effective utilization of the battery output when the charge rate is controlled using the current temperature of a position where measurement is easy and the predicted air temperature by meteorological data.

[3] In [1] described above, with respect to the present battery system 3, 6, instead of the internal temperature of the battery cell, the surface temperature of the battery cell and the ambient temperature may be substituted conveniently. To be more precise, an estimated temperature combiningly using various kind of correcting means may be employed. Also, by setting a condition of charging control described below based on the battery characteristic illustrated in FIG. 4 and FIG. 5, the present battery system 3, 6 obtained a good result. It is preferable that the electric characteristic is applied based on a specification of the battery stored in a memory included in the control unit 61.

- When the battery temperature is to be applied to information of the temperature, the first temperature threshold is set to 30°C or above, and the second temperature threshold is set to 30°C or below.
- When the ambient temperature is to be applied to information of the temperature, the first temperature threshold is set to 25°C or above, and the second temperature threshold is set to 25°C or below.

[4] In the present battery system 3, 6 of [1] described above, even when a condition of charging control was set concretely as described below, the control unit 61 obtained a good result adapting to the ambient temperature. The condition of charging control described below also may be applied based on the specification of the battery stored in a memory included in the control unit 61. That is to say, the above is setting based on the battery characteristic illustrated in FIG. 4 and FIG. 5.

- The first charge rate threshold is set to 70% or above of the charge rate, and the second charge rate threshold is set to 70% or below of the charge rate.

[5] In the present battery system 3, 6 of [1] described above, even when a condition of charging control was set concretely as described below, the control unit 61 obtained a good result adapting to the ambient temperature. The condition setting of charging control described below also may be applied based on the specification of the battery stored in a memory included in the control unit 61. That is to say, the above is setting based on the battery characteristic illustrated in FIG. 4 and FIG. 5.

- When the battery temperature is to be applied to information of the temperature, the first temperature threshold is set to 35°C or above, and the second temperature threshold is set to 20°C or below.
- When the ambient temperature is to be applied to information of the temperature, the first temperature threshold is set to 30°C or above, and the second temperature threshold is set to 10°C or below.

[6] In the present battery system 3, 6 of [1] described above, even when a condition of charging control was set concretely as described below, the control unit 61 obtained a good result adapting to the ambient temperature. The condition setting of charging control described below also may be applied based on the specification of the battery stored in a memory included in the control unit 61. That is to say, the above is setting based on the battery characteristic illustrated in FIG. 4 and FIG. 5.

- A threshold 1 of the charge rate is set to 75% to 85% of the charge rate, and a threshold 2 of the charge rate is set to 50% to 60% of the charge rate.

[7] In the present battery system 3, 6 of [1] to [6] described above, execution of the condition of charging control was easy in a mode described below, and a good result was obtained. That is to say, the present battery system 3, 6 include a computer, and various kind of hardware devices and sensor groups configuring an electric circuit. Also, a major portion of functions of the control unit 61 is achieved by that the CPU of the computer executes a program stored in the memory. The computer may be one-chip microcomputer or a personal computer, and a part of a computer in use for another usage may be shared.

The control unit 61 forms a data table in a memory included in the control unit 61. In the data table, there is stored at least information of a service end clock time of a mobile body and a charging equipment where the mobile body stops at the service end clock time or in advance by a predetermined time earlier. When it is the service end clock time or in advance by a predetermined time earlier, the control unit 61 allows the power storage system 40 to start charging.

[8] In [7] described above, the mobile body is a railway vehicle, a battery electric vehicle is suitable, and a hybrid electric vehicle is also applicable. With respect to these railway vehicles, in the manner described above, the control unit 61 allows the power storage system 40 to start charging at a charging equipment where the railway vehicle stops at a service end clock time or in advance by a predetermined time earlier and with the charge rate adapted to the ambient temperature. The railway vehicle can travel a section without an overhead contact line with a high energy efficiency since it is charged excellently at the time of starting the first service. Also, a battery cell secures a good result when spinel type lithium manganate is used for a positive electrode active material.

List of Reference Signs

3, 6    battery system
40     power storage system
61     charge rate control unit (Specification)
62     target charge rate
63     temperature threshold
64     service end information
70     charge rate detector

71 temperature detector
72 temperature prediction unit

**Claims**

1. A battery system comprising:

   a power storage system that includes a plurality of battery cells and is mounted on a mobile body; and
   a charge rate control unit that controls the charge rate of the power storage system, wherein
   the charge rate control unit controls,
   on the basis of the temperature of the power storage system and the charge rate of the power storage system,
   charging of the power storage system from charging equipment when the operation of the mobile body is ended, and
   the charge rate control unit sets charging control conditions such that:

      the charge rate of the power storage system is greater than a first charge rate threshold in a state in which the temperature of the power storage system is higher than a first temperature threshold, and
      the charge rate of the power storage system is lower than a second charge rate threshold, which is equal to or lower than the first charge rate threshold, in a state in which the temperature of the power storage system is lower than a second temperature threshold which is equal to or lower than the first temperature threshold.

2. The battery system according to claim 1, wherein

   the temperature of the power storage system is the temperature of at least one storage battery out of the plural storage batteries, a measured value of the temperature of at least one storage battery out of the plural storage batteries, or a predicted value of the temperature of at least one storage battery out of the plural storage batteries, and may be converted from an ambient temperature, and
   the charge rate is a measured value of at least one storage battery out of the plural storage batteries.

3. The battery system according to claim 1 or 2, wherein,

   as the charging control condition,
   when the battery temperature is to be applied to information of the temperature, the first temperature threshold is set to equal to or higher than 30°C, and the second temperature threshold is set to equal to or lower than 30°C, and when ambient temperature is to be applied to information of temperature, the first temperature threshold is set to equal to or higher than 25°C, and the second temperature threshold is set to equal to or lower than 25°C.

4. The battery system according to claim 1 or 2, wherein,

   as the charging control condition,
   the first charge rate threshold is set to equal to or higher than 70% of the charge rate, and the second charge rate threshold is set to equal to or lower than 70% of the charge rate.

5. The battery system according to claim 1 or 2, wherein,

   as the charging control condition,
   when the battery temperature is to be applied to information of the temperature, the first temperature threshold is set to equal to or higher than 35°C, and the second temperature threshold is set to equal to or lower than 20°C, and when the ambient temperature is to be applied to information of the temperature, the first temperature threshold is set to equal to or higher than 30°C, and the second temperature threshold is set to equal to or lower than 10°C.

6. The battery system according to claim 1 or 2, wherein,

   as the charging control condition,
   the first charge rate threshold is set to 75% to 85% charge rate, and the second charge rate threshold is set to 50% to 60% charge rate.

7. The battery system according to any one of claims 1 to 6, wherein
   the charge rate control unit stores information of:

   a service end clock time of the mobile body;
   a charging equipment where the mobile body stops immediately before end of service; and
   a clock time when the mobile body stops at the charging equipment,
   in a memory included in the charge rate control unit, and
   the charge rate control unit starts charging at the service end clock time or in advance by a predetermined time earlier.

8. The battery system according to claim 7,
   wherein the mobile body is a railway vehicle, and the battery cell uses spinel type lithium manganate for a positive electrode active material.

9. A method of controlling a battery, comprising a step of using:

a power storage system that includes a plurality of battery cells and is mounted on a mobile body; and
a charge rate control unit that controls the charge rate of the power storage system, wherein
the charge rate control unit controls,
on the basis of the temperature of the power storage system and the charge rate of the power storage system,
charging of the power storage system from charging equipment when the operation of the mobile body is ended, and
the charge rate control unit sets charging control conditions such that:

the charge rate of the power storage system is greater than a first charge rate threshold in a state in which the temperature of the power storage system is higher than a first temperature threshold; and
the charge rate of the power storage system is lower than a second charge rate threshold, which is equal to or lower than the first charge rate threshold, in a state in which the temperature of the power storage system is lower than a second temperature threshold which is equal to or lower than the first temperature threshold.

10. The method of controlling a battery according to claim 9, wherein

the temperature of the power storage system is the temperature of at least one storage battery out of the plural storage batteries, a measured value of the temperature of at least one storage battery out of the plural storage batteries, or a predicted value of the temperature of at least one storage battery out of the plural storage batteries, and may be converted from an ambient temperature, and
the charge rate is a measured value of at least one storage battery out of the plural storage batteries.

11. The method of controlling a battery according to claim 9 or 10, wherein,

as the charging control condition,
when the battery temperature is to be applied to information of the temperature, the first temperature threshold is set to equal to or higher than 30°C, and the second temperature threshold is set to equal to or lower than 30°C, and when ambient temperature is to be applied to information of temperature, the first temperature threshold is set to equal to or higher than 25°C, and the second temperature threshold is set to equal to or lower than 25°C.

12. The method of controlling a battery according to claim 9 or 10, wherein,

as the charging control condition,
the first charge rate threshold is set to equal to or higher than 70% charge rate, and the second charge rate threshold is set to equal to or lower than 70% charge rate.

13. The method of controlling a battery according to claim 9 or 10, wherein

when the battery temperature is to be applied to information of the temperature, the first temperature threshold is set to equal to or higher than 35°C, and the second temperature threshold is set to equal to or lower than 20°C, and when the ambient temperature is to be applied to information of the temperature, the first temperature threshold is set to equal to or higher than 30°C, and the second temperature threshold is set to equal to or lower than 10°C.

14. The method of controlling a battery according to claim 9 or 10, wherein

in the charging control condition,
the first charge rate threshold is set to 75% to 85% of the charge rate, and the second charge rate threshold is set to 50% to 60% of the charge rate.

15. The method of controlling a battery according to any one of claims 9 to 14, wherein
the charge rate control unit stores information of:

a service end clock time of the mobile body;
a charging equipment where the mobile body stops immediately before end of service; and
a clock time when the mobile body stops at the charging equipment,
in a memory included in the charge rate control unit, and
the charge rate control unit starts charging at the service end clock time or in advance by a predetermined time earlier.

FIG. 1

# FIG. 2

# FIG. 3

EP 4 485 750 A1

# FIG. 4

# FIG. 5

# FIG. 6

<u>6</u>

## INTERNATIONAL SEARCH REPORT

| | International application No. |
|---|---|
| | **PCT/JP2022/048652** |

**A. CLASSIFICATION OF SUBJECT MATTER**

*H02J 7/04*(2006.01)i; *G01R 31/374*(2019.01)i; *G01R 31/385*(2019.01)i; *H01M 10/48*(2006.01)i; *H02J 7/00*(2006.01)i
FI: H02J7/04 L; H02J7/00 P; H01M10/48 P; H01M10/48 301; G01R31/385; G01R31/374

According to International Patent Classification (IPC) or to both national classification and IPC

**B. FIELDS SEARCHED**

Minimum documentation searched (classification system followed by classification symbols)

H02J7/04; G01R31/374; G01R31/385; H01M10/48; H02J7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/157524 A1 (MITSUBISHI ELECTRIC CORP.) 06 October 2016 (2016-10-06) paragraphs [0012]-[0063], fig. 1-13 | 1-2, 9-10 |
| A | | 3-8, 11-15 |
| A | JP 2021-129439 A (KABUSHIKI KAISHA TOYOTA JIDOSHOKKI) 02 September 2021 (2021-09-02) entire text, all drawings | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 February 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 485 750 A1

**INTERNATIONAL SEARCH REPORT**
Information on patent family members

International application No.

**PCT/JP2022/048652**

| Patent document<br>cited in search report | Publication date<br>(day/month/year) | Patent family member(s) | Publication date<br>(day/month/year) |
|---|---|---|---|
| WO 2016/157524 A1 | 06 October 2016 | US 2017/0350943 A1<br>paragraphs [0041]-[0173], fig.<br>1-13<br>CN 107430170 A | |
| JP 2021-129439 A | 02 September 2021 | (Family: none) | |

Form PCT/ISA/210 (patent family annex) (January 2015)

**REFERENCES CITED IN THE DESCRIPTION**

**Patent documents cited in the description**

- JP 2019004565 A